# EUROPEAN PATENT SPECIFICATION

(11) **EP 4 217 144 B1**
(45) Date of publication and mention of the grant of the patent: **08.04.2026**
(21) Application number: 21782506.6
(22) Date of filing: 21.09.2021
(51) Int. Cl.: B23Q 1/01, B23Q 3/157, B23Q 39/04, B23Q 1/62

(54) **MULTI-AXIS MACHINING CENTER WITH MECHANIZED TOOL MAGAZINE**
MEHRACHSIGES BEARBEITUNGSZENTRUM MIT MECHANISIERTEM WERKZEUGMAGAZIN
CENTRE D'USINAGE MULTI-AXES AVEC MAGASIN D'OUTILS MÉCANISÉ

(30) Priority: 24.09.2020 IT 202000022522
(43) Date of publication of application: 02.08.2023
(73) Proprietor: Vigel S.p.A., 10071 Borgaro Torinese (IT)
(72) Inventor: FRANCESIA VILLA, Daniele, 10070 Mezzenile (IT); STABIO, Diego, 10076 Nole (IT)
(74) Representative: Modiano, Micaela Nadia
(86) International application number: PCT/EP2021/075940
(87) International publication number: WO 2022/063775

(56) References cited:
- EP-A2- 1 004 397
- EP-A2- 1 240 974
- WO-A1-97/41997
- WO-A2-2009/093877
- DE-A1- 19 963 863
- DE-U1- 202015 009 036

## Description

The present invention relates to a multi-axis machining center with mechanized tool magazine.

As is known, a multi-axis machining center may comprise generally a motorized tool holding spindle mounted on a machining head which can move along two or more axes, with respect to the workpiece to be machined, so as to subject the workpiece to different successive machining processes such as milling, boring, tapping, and the like.

The spindle axis may be arranged horizontally or vertically.

It is also known to provide machining centers of the type cited above with a mechanized tool magazine, from which the spindle automatically picks up the tools to be used in the various machining steps by utilizing the mobility in the space of the machining head.

A tool magazine of the known type, particularly appreciated for its reliability, comprises a motorized tool holding drum. In the case of a spindle with horizontal axis, the tool holding drum can be arranged so as to face the spindle with its horizontal axis and at right angles to the axis of the spindle, so as to present to said spindle the tools to be picked up.

In order to increase productivity, the machining center may be also provided with multiple parallel spindles mounted on a single machining head, so as to machine multiple workpieces simultaneously.

Although machining centers of the type cited above are highly appreciated both for their machining precision and for their productivity - since they are able to perform several machining operations on the workpiece with a single positioning - they have the limitation of being suitable mostly for the machining of small- to medium-sized workpieces, for example mechanical parts in the automotive sector or in the industrial sector.

Larger workpieces, such as portions of the chassis or body of a vehicle, currently can be subjected to successive machining processes on different machine tools, with a consequent drastic reduction in both productivity and machining precision, since the workpiece must be repositioned each time it is transferred from one machine tool to the next.

"Multitasking" machines are known which are capable of performing different machining processes on large workpieces, but they too are limited in terms of productivity since they are provided with a single spindle which can move with respect to multiple axes, for example five axes.

In addition, known multitasking machines, despite using a single spindle, are extremely bulky and therefore difficult to be placed inside the production facility.

Patent Document WO 2009/093877 A2 discloses a machining center on which the preamble of appended claim 1 is based.

The aim of the present invention is to provide a multi-axis machining center with mechanized tool magazine that is capable of machining large workpieces, such as portions of the chassis or body of vehicles, while having substantially the same machining versatility and the same dimensions as machining centers intended for machining small- to medium-sized workpieces.

Within this aim, an object of the invention is to provide a multi-axis machining center that has a much greater productivity than currently known multitasking machines for machining large workpieces.

This aim and this and other objects which will become more apparent from the description that follows are achieved by the machining center having the characteristics described in claim 1, while the dependent claims define other advantageous, albeit secondary, characteristics of the invention.

The invention is now described in greater detail with reference to some of its preferred but not exclusive embodiments, illustrated by way of non-limiting example in the accompanying drawings, wherein:
Figure 1 is a schematic plan view of a machining center according to the invention;
Figure 2 is a schematic lateral elevation view of the machining center of Figure 1.

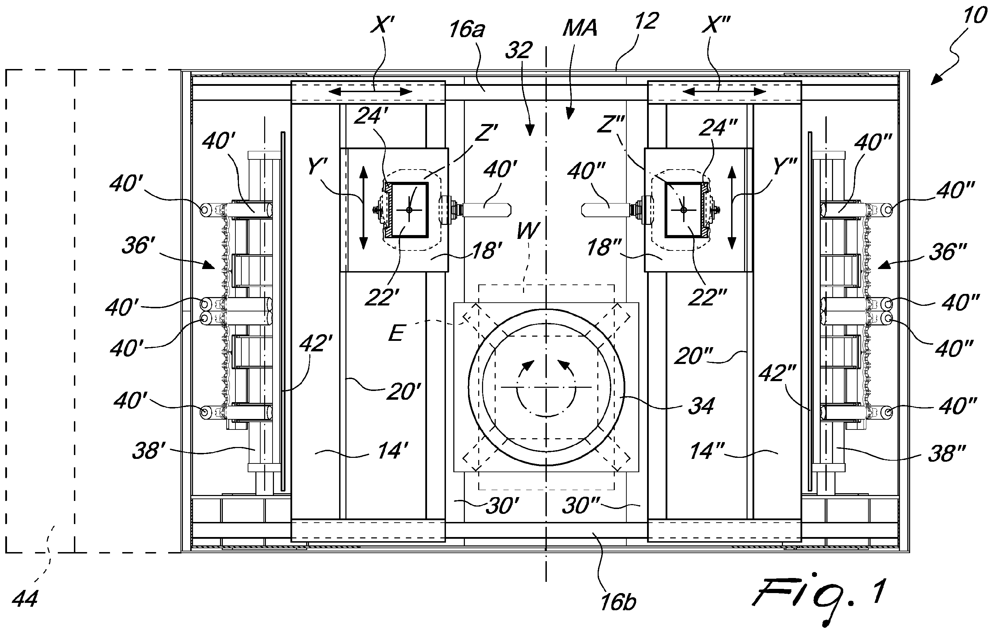

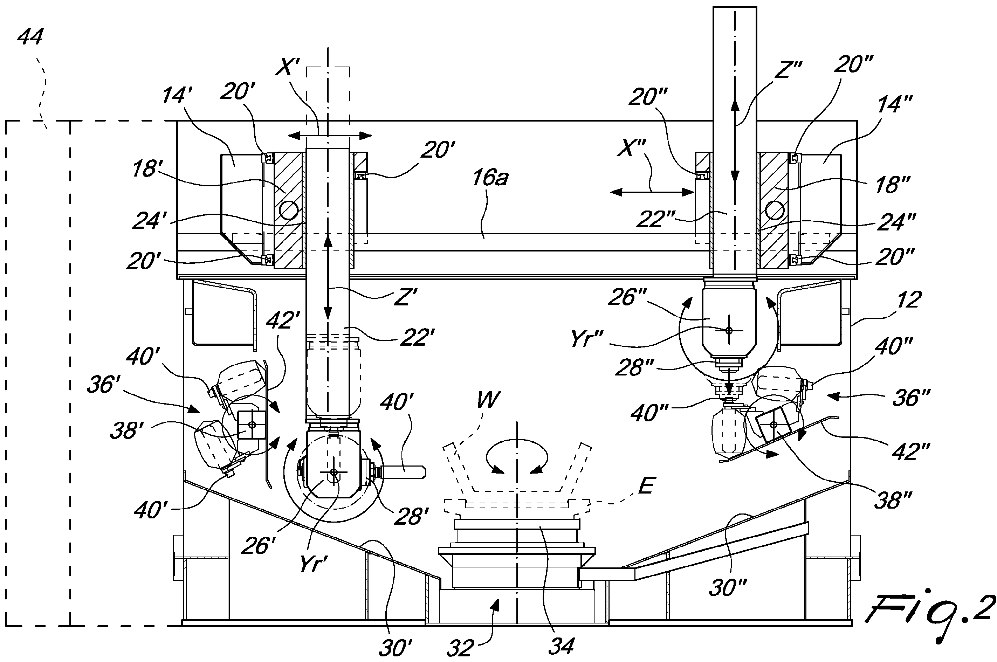

With reference to Figures 1 and 2, a machining center 10 according to the invention comprises a supporting structure 12, which in the schematic embodiment shown has a box-like profile, in which a work area MA is defined.

Two independent carriages 14', 14" are slidingly supported by a pair of parallel horizontal rails 16a, 16b fixed in an elevated position, preferably at the upper end, of the supporting structure 12 and extended in a longitudinal direction.

Therefore, each one of the two carriages 14', 14" can slide along a respective longitudinal translation axis X', X".

Each one of the two carriages 14', 14" supports a respective slider 18', 18", which can slide along a respective horizontal guide 20', 20" which is integral with the carriage 14', 14" and is extended along a respective transverse translation axis Y', Y".

Each one of the sliders 18', 18" supports a respective machining head 22', 22", which is in turn supported slidingly on a respective vertical guide 24', 24" which is integral with the slider 18', 18" and is extended along a respective vertical translation axis Z', Z".

In particular, the machining head 22', 22" is provided, at its lower end, with a fork-like support 26', 26" (Figure 2), by virtue of which it supports a tool holding spindle 28', 28" so that it can rotate about a horizontal rotation axis Yr', Yr". In this embodiment, the horizontal rotation axis Yr', Yr" is fixed (with respect to the respective machining head 22', 22") and is extended in a transverse direction.

The spindle 28', 28" can carry different types of tools for machining processes such as milling, boring, tapping, and the like.

According to a preferred embodiment of the invention, the base of the supporting structure (12) comprises at least one chute which leads into a chip discharge area, advantageously two longitudinally mutually opposite chutes 30', 30" which lead into a central chip discharge area 32.

The base 30', 30" supports a workpiece holding table 34 which, in this embodiment, comprises a disc-like body arranged with a vertical axis and rotatable about said axis.

In this embodiment, the workpiece holding table 34 is arranged in a position that is longitudinally centered and transversely offset, for the purposes that will be clarified in greater detail hereinafter.

In a manner known per se, the workpiece W being machined (shown schematically in dashed lines) can be fixed to the workpiece holding table 34 by means of a workpiece holding fixture E (shown schematically in dashed lines).

The machining center 10 is provided with two mechanized tool magazines 36', 36" arranged at the opposite longitudinal ends of the supporting structure 12 so as to be accessible by the two spindles 28', 28" respectively.

In this embodiment, each one of the two tool magazines 36', 36" comprises a rotating tool holding drum 38', 38", which supports peripherally a plurality of tools 40', 40". The rotating tool holding drums 38', 38" are arranged so that their axes are horizontal and parallel to the transverse translation axes Y', Y". In each of the tool magazines 36', 36", the tools 40', 40" are arranged along two angularly spaced rows of the respective tool holding drum 38', 38", said rows being extended parallel to the axis of the respective tool holding drum 38', 38".

The spindles 28', 28" pick up automatically the tools 40', 40" to be used in the various machining steps from the respective mechanized tool magazines 36', 36", utilizing the mobility in the space of the respective machining heads 22', 22". Depending on where the tool is located on the tool holding drum 38', 38", the drum is rotated so as to present the tools of one row or the other to the respective spindle 28', 28".

Advantageously, each one of the tool magazines 36', 36" is provided with a shield 42', 42" which, in this embodiment, is fixed to the respective tool holding drum 38', 38". During machining, the tool holding drum 38', 38" is rotated so as to direct the respective shield 42', 42" toward the work area MA, so as to hide the respective tool magazine 36', 36" and protect it from the machining chips.

In an alternative embodiment, the shields might be movable independently of the respective drums.

Of course, all of the movable components described above of the machining center are motorized by means of actuation systems of the conventional type, for example electric actuators, hydraulic actuators and/or pneumatic actuators, which are subjected to a control unit (not shown), in a manner that is per se conventional in the field.

An electric/fluidic control unit 44 (shown schematically with the dashed line in the figures) is arranged selectively at one of the two longitudinal ends of the supporting structure 12, in a spaced position so as to form an operator passage for access to the tool magazine.

Naturally, the supporting structure 12 can be provided with inspection doors or windows (not shown) on one or more sides, in a manner that is per se conventional in the field.

In operation, the workpiece W to be machined is fixed on the rotating table 34 by means of the fixture E.

The workpiece W can be machined simultaneously by both spindles 28', 28", so as to increase productivity and, in some cases, even double it with respect to known solutions.

For example, the spindles 28', 28" can perform a same operation on two opposite sides of the workpiece W or, being completely independent, different operations by picking up tools of different types from the respective tool magazines 36', 36".

During machining, the shields 42', 42" protect the tool magazines 36', 36" from the machining chip, which therefore falls into the chip collection area 32 via the chutes 30', 30".

The spindles 28', 28" can move along the three Cartesian axes and also rotate about the respective transverse rotation axes Yr', Yr". A further degree of freedom is provided by the rotation of the workpiece holding table 34 about its own vertical axis, so that any large workpiece, with a single placement, can be machined substantially in any direction and on any side directed toward the work area MA.

In an alternative embodiment, the fork-like supports 26', 26" might be rotatable about the respective vertical translation axes Z', Z" (or about respective axes which are parallel to them). In this case, the workpiece holding table 34 might be fixed or rotating.

As the person skilled in the art may appreciate, one advantage of the invention is that the two carriages 14', 14" share the same rails 16a, 16b for translation in a longitudinal direction. In this manner, each one of the two spindles 28', 28" can "trespass", in a longitudinal direction, onto the half of the work area that is occupied by the other spindle, thus offering high versatility.

In this embodiment, the transversely axially offset position of the rotating table allows the spindles 28', 28" to machine workpieces whose dimensions are larger (even substantially twice as large) than the useful stroke of the horizontal guides 20', 20".

Some preferred embodiments of the invention have been described, but the person skilled in the art may of course apply various modifications and variations within the scope of the claims.

For example, each one of the carriages might support two sliders, and each one of the sliders in turn might support two or more spindles for machining simultaneously multiple relatively small workpieces mounted on the workpiece holding table. In fact, although the machining center described and illustrated therein has been conceived for the machining of large workpieces, such as chassis or body parts in the automotive, aviation, nautical industry and the like, it has been found in practice that the same principles can be applied to machining centers for machining small- to medium-sized workpieces, obtaining numerous advantages.

Moreover, the transversely axially offset position of the workpiece holding table is to be understood as an advantageous but not necessary characteristic of the invention.

The guiding means that allow the translation or rotation of the various movable elements of the machining center may be provided by means of technologies commonly used in the industry, which are well-known to the person skilled in the art, such as rotating supports or sliding supports using roller bearings, low-friction sliders, and the like.

Naturally, the fork-like supports 26', 26" that rotatably support the spindles 28', 28" may be replaced by rotary supporting means having different shapes, for example, rotary supports having a single arm instead of two parallel arms as in the case of the forks.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machining center, **characterized in that** it comprises a supporting structure (12) having a base (30', 30") and two independent carriages (14', 14") both supported so that they can slide along respective longitudinal translation axes (X', X") by a pair of parallel horizontal rails (16a, 16b) which extend along a longitudinal direction and are fixed in a raised position to the supporting structure (12), each one of said carriages (14', 14") supporting a respective machining head (22', 22") which can move along a respective transverse translation axis (Y', Y") and along a respective vertical translation axis (Z', Z") by means of respective guiding means (18', 18", 20', 20", 24', 24"), each one of said machining heads (22', 22") supporting a respective tool holding spindle (28', 28") in a rotatable manner about a horizontal rotation axis (Yr', Yr") by rotary support means (26', 26"), said machining center (10) further comprising a workpiece holding table (34) which is supported at the base (30', 30") of said supporting structure (12), and two mechanized tool magazines (36', 36") which are supported at the opposite longitudinal ends of said supporting structure (12) in order to be accessible by each one of said spindles (28', 28"), at least one of said rotary support means (26', 26") and said workpiece holding table axis, said machining (34') being able to rotate about a respective vertical center being **characterized in that** said guiding means comprise, for each one of said carriages (14', 1 4"), a slider (18', 18") which can slide along a respective horizontal guide (20', 20") which is integral with the carriage (14', 14") and extends in a transverse direction, and, for each one of said sliders (18', 18"), a vertical guide (24', 24") which is integral with the slider (18', 18") and is engaged slidingly by a respective one of the machining heads (22', 22"), each of said tool magazines (36', 36") comprising a rotating tool holding drum (38', 38"), which is arranged so that its axis is horizontal and transverse, and supports peripherally a plurality of tools (40', 40").

2. The machining center (10) according to claim 1, **characterized in that** said rotary support means comprise a fork-like support (26', 26").

3. The machining center (10) according to claim 1 or 2, **characterized in that** the base of said supporting structure (12) comprises at least one chute (30', 30") which leads into a chip discharge area (32).

4. The machining center (10) according to claim 43, **characterized in that** said base comprises two longitudinally mutually opposite chutes (30', 30") which lead into a central chip discharge area (32).

5. The machining center (10) according to one of claims 1-4 **characterized in that** said workpiece holding table (34) is arranged in a position that is longitudinally centered and transversely offset.

6. The machining center (10) according to claim 1, **characterized in that** each one of said tool magazines (36', 36") is provided with a shield (42', 42") that is adapted to shelter, during machining, the respective tool magazine (36', 36") from the machining chips.

7. The machining center (10) according to claim 6 **characterized in that** said shield (42', 42") is fixed to the respective tool holding drum (38', 38").

8. The machining center (10) according to one of claims 1-7 **characterized in that** each one of said rotary support means (26', 26") can rotate about an axis that is parallel to, or coincides with, the respective vertical translation axis (Z', Z").

## Patentansprüche

1. Ein Bearbeitungszentrum, **dadurch gekennzeichnet, dass** es eine tragende Struktur (12) mit einer Basis (30', 30") und zwei unabhängigen Schlitten (14', 14") umfasst, die beide entlang entsprechenden Translations-Längsachsen (X', X") verschiebbar auf einem Paar paralleler horizontaler Schienen (16a, 16b) gelagert sind, die sich in einer Längsrichtung erstrecken und in einer erhöhten Position mit Bezug auf die tragende Struktur (12) befestigt sind, wobei jeder der Schlitten (14', 14") einen entsprechenden Bearbeitungskopf (22', 22") trägt, welcher sich mit Hilfe entsprechender Führungsmittel (18', 18", 20', 20", 24', 24") entlang einer entsprechenden transversalen Translationsachse (Y', Y") und entlang einer entsprechenden vertikalen Translationsachse (Z', Z") bewegen kann; wobei jeder der Bearbeitungsköpfe (22', 22") eine entsprechende Werkzeugaufnahmespindel (28', 28") drehbar um eine horizontale Drehachse (Yr', Yr") durch rotatorische Lagerungsmittel (26', 26") gelagert trägt; wobei das Bearbeitungszentrum (10) weiter einen Werkstücktisch (34) umfasst, welcher auf der Basis (30', 30") der tragenden Struktur (12) gelagert ist, und zwei mechanisierte Werkzeugmagazine (36', 36"), die auf den gegenüberliegenden Längsenden der tragenden Struktur (12) gelagert sind, um für jede der Spindeln (28', 28") zugänglich zu sein; wobei die rotatorischen Lagerungsmittel (26', 26") und/oder der Werkstücktisch (34) in der Lage sind, sich um eine entsprechende vertikale Achse zu drehen; wobei das Bearbeitungszentrum **dadurch gekennzeichnet ist, dass** die Führungsmittel für jeden der Schlitten (14', 14") einen Schieber (18', 18") umfassen, der entlang einer entsprechenden horizontalen Führung (20', 20") gleiten kann, die integral mit dem Schlitten (14', 14") ist und sich in eine transversale Richtung erstreckt, und für jeden der Schieber (18', 18") eine vertikale Führung (24', 24"), die integral mit dem Schieber (18', 18") ist und verschiebbar mit einem jeweiligen der Bearbeitungsköpfe (22', 22") in Eingriff steht; wobei jedes der Werkzeugmagazine (36', 36") eine Befestigungswalze (38', 38") für drehende Werkzeuge umfasst, die so angeordnet ist, dass ihre Achse horizontal und transversal ist, und peripher eine Vielzahl von Werkzeugen (40', 40") trägt.

2. Das Bearbeitungszentrum (10) gemäß Anspruch 1, **dadurch gekennzeichnet, dass** die rotatorischen Lagerungsmittel eine gabelförmige Lagerung (26', 26") umfassen.

3. Das Bearbeitungszentrum (10) gemäß Anspruch 1 oder 2, **dadurch gekennzeichnet, dass** die Basis der tragenden Struktur (12) mindestens eine Rutsche (30', 30") umfasst, die in einen Spanabgabebereich (32) führt.

4. Das Bearbeitungszentrum (10) gemäß Anspruch 3, **dadurch gekennzeichnet, dass** die Basis zwei einander in Längsrichtung gegenüberliegende Rutschen (30', 30") umfasst, die in einen zentralen Spanabgabebereich (32) führen.

5. Das Bearbeitungszentrum (10) gemäß einem der Ansprüche 1-4, **dadurch gekennzeichnet, dass** der Werkstücktisch (34) in einer Position angeordnet ist, die in Längsrichtung zentriert und quer versetzt ist.

6. Das Bearbeitungszentrum (10) gemäß Anspruch 1, **dadurch gekennzeichnet, dass** jedes der Werkzeugmagazine (36', 36") mit einer Abschirmung (42', 42") ausgestattet ist, die ausgebildet ist, um während der Bearbeitung das jeweilige Werkzeugmagazin (36', 36") gegenüber den Bearbeitungsspänen abzuschirmen.

7. Das Bearbeitungszentrum (10) gemäß Anspruch 6, **dadurch gekennzeichnet, dass** die Abschirmung (42', 42") an der jeweiligen Werkzeug-Befestigungswalze (38', 38") befestigt ist.

8. Das Bearbeitungszentrum (10) gemäß einem der Ansprüche 1-7, **dadurch gekennzeichnet, dass** jedes der rotatorischen Lagerungsmittel (26', 26") sich um eine Achse drehen kann, die parallel zu der jeweiligen vertikalen Translationsachse (Z', Z") ist oder mit ihr zusammenfällt.

## Revendications

1. Centre d'usinage, **caractérisé en ce qu'**il comprend une structure de support (12) comportant une base (30', 30") et deux chariots indépendants (14', 14") tous deux supportés de manière à pouvoir coulisser le long d'axes de translation longitudinaux respectifs (X', X") par une paire de rails horizontaux parallèles (16a, 16b) qui s'étendent dans une direction longitudinale et sont fixés en position surélevée à la structure de support (12), chacun desdits chariots (14', 14") supportant une tête d'usinage respective (22', 22") qui peut se déplacer le long d'un axe de translation transversal respectif (Y', Y") et le long d'un axe de translation vertical respectif (Z', Z") au moyen de moyens de guidage respectifs (18', 18", 20', 20", 24', 24" ), chacune desdites têtes d'usinage (22', 22") supportant une broche porte-outil respective (28', 28") de manière rotative autour d'un axe de rotation horizontal (Yr', Yr") par des moyens de support rotatifs (26', 26"), ledit centre d'usinage (10) comprenant en outre une table de support de pièce (34) qui est supportée à la base (30', 30") de ladite structure de support (12), et deux magasins d'outils mécanisés (36', 36") qui sont supportés aux extrémités longitudinales opposées de ladite structure de support (12) afin d'être accessibles par chacune desdites broches (28', 28"), au moins l'un desdits moyens de support rotatifs (26', 26") et ladite table de support de pièce (34) pouvant tourner autour d'un axe vertical respectif, ledit centre d'usinage étant **caractérisé en ce que** lesdits moyens de guidage comprennent, pour chacun desdits chariots (14', 14"), un coulisseau (18', 18") pouvant coulisser le long d'un guide horizontal respectif (20', 20") qui est solidaire du chariot (14', 14") et s'étend dans une direction transversale, et, pour chacun desdits coulisseaux (18', 18"), un guide vertical (24', 24") qui est solidaire du coulisseau (18', 18") et est engagé de manière coulissante par l'une respective des têtes d'usinage (22', 22"), chacun desdits magasins d'outils (36', 36") comprenant un tambour rotatif de maintien d'outils (38', 38"), qui est agencé de telle sorte que son axe est horizontal et transversal, et supporte périphériquement une pluralité d'outils (40', 40").

2. Centre d'usinage (10) selon la revendication 1, **caractérisé en ce que** lesdits moyens de support rotatifs comprennent un support en forme de fourche (26', 26").

3. Centre d'usinage (10) selon l'une des revendications 1 ou 2, **caractérisé en ce que** la base de ladite structure de support (12) comprend au moins une goulotte (30', 30") qui débouche dans une zone d'évacuation des copeaux (32).

4. Centre d'usinage (10) selon la revendication 3, **caractérisé en ce que** ladite base comprend deux goulottes longitudinalement opposées (30', 30") qui débouchent dans une zone centrale d'évacuation des copeaux (32).

5. Centre d'usinage (10) selon l'une des revendications 1 à 4, **caractérisé en ce que** ladite table de support de pièce (34) est disposée dans une position centrée longitudinalement et décalée transversalement.

6. Centre d'usinage (10) selon la revendication 1, **caractérisé en ce que** chacun desdits magasins d'outils (36', 36") est muni d'un écran (42', 42") qui est adapté pour protéger, pendant l'usinage, le magasin d'outils respectif (36', 36") des copeaux d'usinage.

7. Centre d'usinage (10) selon la revendication 6, **caractérisé en ce que** ledit écran (42', 42") est fixé au tambour de maintien d'outils respectif (38', 38").

8. Centre d'usinage (10) selon l'une des revendications 1 à 7, **caractérisé en ce que** chacun desdits moyens de support rotatifs (26', 26") peut tourner autour d'un axe qui est parallèle à l'axe de translation verticale respectif (Z', Z '') ou qui coïncide avec celui-ci.
